# EUROPÄISCHE PATENTANMELDUNG

(11) **EP 3 281 520 A1**
(43) Veröffentlichungstag der Anmeldung: **14.02.2018**
(21) Anmeldenummer: 17184654.6
(22) Anmeldetag: 03.08.2017
(51) Int. Cl.: A01K 61/00, A01K 63/00, A01K 63/04, C02F 1/00

(54) **GESCHLOSSENE KREISLAUFANLAGE ZUR ZÜCHTUNG VON SPEISEFISCHEN**

(30) Priorität: 11.08.2016 RU 2016133164
(71) Anmelder: Yakushev, Dmitry, 125222 Moskau (RU); Kitashin, Oleg, 140003 Lubertsy (RU); Kitashin, Jurii, 140003 Lubertsy (RU); Dubrovin, Evgeny, 123056 Moskau (RU); Dubrovin, Dmitry, 121614 Moskau (RU)
(72) Erfinder: Yakushev, Dmitry, 125222 Moskau (RU); Kitashin, Oleg, 140003 Lubertsy (RU); Kitashin, Jurii, 140003 Lubertsy (RU); Dubrovin, Evgeny, 123056 Moskau (RU); Dubrovin, Dmitry, 121614 Moskau (RU)
(74) Vertreter: Jeck, Anton

(57) **Zusammenfassung**

Die Erfindung bezieht sich auf den Bereich der Wirtschaftsfischzucht und kann zur Züchtung von Speisefischen in geschlossenen Kreislaufanlagen angewendet werden.

Die beanspruchte Anlage besteht aus untereinander mittels Wasserleitungen und Daten-Schaltkanälen zusammenwirkenden Wasserorganismenzüchtungseinheiten, einem Wasser-Stabilisiertank, einer mechanischen Filterungseinheit, einer biologischen Wasseranreicherungseinheit, einem Denitrifikations-Biofilter, einem Nitrifikations-Biofilter, einem Belüftungskanal, einer UV-Bestrahlungseinheit, einem Boiler, einer Wasser-pH-Stabilisiereinheit, einer Pumpe, einem ersten Luftverdichter, Fischtanks, einem Wasserreservetank, einem zweiten Luftverdichter, einer Frischwasserzugabe-Einheit, einer Abführungseinheit zur Abführung von Abwasser und Sedimenten aus der biologischen Wasseranreicherungseinheit, dem Denitrifikations-Biofilter und dem Nitrifikations-Biofilter, einem ersten Verschluss, einem zweiten Verschluss, einem dritten Verschluss und einer Füllstandautomatikeinheit, die einen IBM-kompatiblen Personalcomputer umfasst, einer Wasserparameterüberwachungs- und -steuereinheit, einer Absaugpumpe zur Förderung von Sedimenten aus der biologischen Wasseranreicherungseinheit, dem Denitrifikations-Biofilter und dem Nitrifikations-Biofilter, einem Mischventil, einer Pumpe der biologischen Wasseranreicherungseinheit und einer Pumpe des Wasserreservetanks.

Auf dem IBM-kompatiblen Personalcomputer der Füllstandautomatikeinheit ist die Software "Steuerprogramm für verfahrenstechnische Prozesse in modernen Fischzuchtanlagen" installiert.

Der erwartete technische Effekt durch die Anwendung der angemeldeten Anlage ist eine erhöhte Besatzdichte der Speisefischarten.

## Beschreibung

Die Erfindung bezieht sich auf die Gewerbefischerei und kann zur Züchtung von Speisefischen unter Bedingungen eines geschlossenen Wasserversorgungszyklus angewendet werden.

Aus dem Stand der Technik ist eine geschlossene Kreislaufanlage bekannt (RU129762). Die bekannte Kreislaufanlage umfasst eine Abwasserreinigungsanlage, Fischtanks (oder Tröge), einen Sauerstoffgenerator, einen Temperaturregler, eine Zentrifugalpumpe und ein Absatzgefäß. Dabei ist die Abwasserreinigungsanlage durch einen Wasserhochbehälter, Tauchfilter und einen Wasserbelüfter-Strömungserzeuger gebildet. Der Wasserbelüfter-Strömungserzeuger ist so angeordnet, dass die durch ihn erzeugte Strömung auf die vordere Querwand des genannten Gefäßes ausgerichtet ist. Wenn die Strömung die Querwand trifft, zerfällt sie, bekommt eine zusätzliche Menge Sauerstoff und kehrt um. Dann erzeugt sie eine Hin- und Herbewegung einer immer gleichen Wassermenge im Gefäß vom Wasserbelüfter-Strömungserzeuger zur vorderen Querwand und von dort aus zur hinteren Wand und zurück. Somit entsteht eine Wasserwirbelströmung im Gefäß. Sie sättigt das Wasser mit Sauerstoff. Die Kontaktzeit zwischen den Luftbläschen und dem Wasser wird verlängert. Der Nutzeffekt des eingesetzten Sauerstoffs nimmt zu. Dabei werden Eisenhydroxid, ungebundene Kohlensäure und Schwefelwasserstoff aus dem Wasser entfernt. Die Schlammmischungen werden vermengt. Die im Wasser aufgelösten organischen Substanzen werden mineralisiert. Das Wasser fließt aus dem Wasserhochbehälter im Selbstfluss in den Sauerstoffgenerator, dann in die Fischbecken und in das Absatzgefäß. Danach wird es in den Wasserhochbehälter gepumpt. Die Tauchbiopakete sind den Wänden des Wasserhochbehälters entlang innerhalb der Wirbelströmung des mit Sauerstoff gesättigten Wassers angeordnet.

Diese bekannte Vorrichtung hat den Nachteil, dass die Besatzdichte der gezüchteten Fische gering ist.

Der nächstliegende Stand der Technik gegenüber der beanspruchten Anlage ihrem technischen Wesen und dem erreichbaren Effekt nach ist eine geschlossene Kreislaufanlage zur Züchtung von Waxdick-Fischarten (RU153081). Die bekannte Vorrichtung ist durch das Vorhandensein eines Stabilisierungswassertanks gekennzeichnet. Der Wassertank hat
- vier Ausgänge und vier Eingänge,
- eine mechanische Filterungseinheit mit vier Ausgängen und einem Eingang,
- eine biologische Wasseranreicherungseinheit mit zwei Ausgängen und zwei Eingängen,
- einen Denitrifikations-Biofilter mit zwei Eingängen und zwei Ausgängen,
- einen Nitrifikations-Biofilter mit einem Ausgang und zwei Eingängen,
- einen Belüftungskanal mit drei Ausgängen, einem Daten-Schaltausgang und sechs Eingängen,
- eine UV-Bestrahlungseinheit mit einem Ausgang, einem Eingang und einem Daten-Schalteingang,
- einen Boiler mit einem Ausgang, einem Eingang und einem Daten-Schalteingang,
- eine Wasser-pH-Stabilisiereinheit mit einem Daten-Schaltausgang und einem Daten-Schalteingang,
- eine Hauptpumpe mit einem Ausgang und einem Eingang,
- einen Luftverdichter mit drei Ausgängen,
- mindestens einen Fischtank mit zwei Ausgängen und zwei Eingängen,
- einen Wasserreservetank mit einem Ausgang, einem Eingang, einem Daten-Schalteingang und einem Daten-Schaltausgang,
- einen zweiten Luftverdichter mit einem Ausgang,
- eine Frischwasserzugabe-Einheit mit einem Ausgang,
- eine Abführungseinheit zur Abführung von Abwasser und Sedimenten aus der biologischen Wasseranreicherungseinheit,
- einen Denitrifikations-Biofilter und
- einen Nitrifikations-Biofilter mit zwei Eingängen,
- einen ersten Verschluss mit einem Ausgang, einem Eingang und einem Daten-Schalteingang,
- einen zweiten Verschluss mit einem Ausgang, einem Eingang und einem Daten-Schalteingang,
- einen dritten Verschluss mit zwei Ausgängen, einem Eingang und einem Daten-Schalteingang,
- eine Füllstandautomatikeinheit mit vier Daten-Schalteingängen und fünf Daten-Schaltausgängen,
- eine Wasserparameterüberwachungs- und -steuereinheit mit drei Daten-Schaltausgängen und einem Daten-Schalteingang,
- eine Absaugpumpe zur Förderung von Sedimenten aus der biologischen Wasseranreicherungseinheit, dem Denitrifikations-Biofilter und dem Nitrifikations-Biofilter. Die Absaugpumpe hat einen Ausgang und drei Eingänge.

Dabei ist der erste Ausgang des Wasser-Stabilisiertanks mit dem ersten Eingang der biologischen Wasseranreicherungseinheit verbunden. Der zweite Ausgang des Wasser-Stabilisiertanks ist mit dem Eingang der mechanischen Filterungseinheit verbunden. Der dritte Ausgang des Wasser-Stabilisiertanks ist mit dem ersten Eingang des ersten Verschlusses verbunden. Der erste Eingang des Wasser-Stabilisiertanks ist mit dem ersten Ausgang des Denitrifikations-Biofilters verbunden. Der zweite Eingang des Wasser-Stabilisiertanks ist mit dem ersten Ausgang der Füllstandautomatikeinheit daten-schalttechnisch verbunden. Der dritte Eingang des Wasser-Stabilisiertanks ist mit dem ersten Ausgang mindestens eines Fischtanks verbunden. Der vierte Eingang des Wasser-Stabilisiertanks ist mit dem Ausgang des Wasserreservetanks verbunden. Der vierte Ausgang des Wasser-Stabilisiertanks ist mit dem ersten Eingang der Füllstandautomatikeinheit daten-schalttechnisch verbunden. Der erste Ausgang der mechanischen Filterungseinheit ist mit dem Eingang des zweiten Verschlusses verbunden. Der zweite Ausgang der mechanischen Filterungseinheit ist mit dem Eingang des dritten Verschlusses verbunden. Der dritte Ausgang der mechanischen Filterungseinheit ist mit dem zweiten Eingang der biologischen Wasseranreicherungseinheit verbunden. Der Daten-Schaltausgang der mechanischen Filterungseinheit ist mit dem zweiten Eingang der Füllstandautomatikeinheit verbunden. Der erste Ausgang der biologischen Wasseranreicherungseinheit ist mit dem ersten Eingang des Denitrifikations-Biofilters verbunden. Der zweite Ausgang der biologischen Wasseranreicherungseinheit ist mit dem ersten Eingang der Absaugpumpe zur Förderung von Sedimenten aus der biologischen Wasseranreicherungseinheit, dem Denitrifikations-Biofilter und dem Nitrifikations-Biofilter verbunden. Der zweite Ausgang des Denitrifikations-Biofilters ist mit dem zweiten Eingang der Absaugpumpe zur Förderung von Sedimenten aus der biologischen Wasseranreicherungseinheit, dem Denitrifikations-Biofilter und dem Nitrifikations-Biofilter verbunden. Der Ausgang des Nitrifikations-Biofilters ist mit dem dritten Eingang des Belüftungskanals verbunden. Der erste Eingang des Belüftungskanals ist mit dem Ausgang der Frischwasserzugabe-Einheit verbunden. Der zweite Eingang des Nitrifikations-Biofilters ist mit dem ersten Ausgang des dritten Verschlusses verbunden. Der zweite Ausgang des dritten Verschlusses ist mit dem dritten Eingang der Absaugpumpe zur Förderung von Sedimenten aus der biologischen Wasseranreicherungseinheit, dem Denitrifikations-Biofilter und dem Nitrifikations-Biofilter verbunden. Der Ausgang des Nitrifikations-Biofilters ist mit dem zweiten Eingang der Abführungseinheit zur Abführung von Abwasser und Sedimenten aus der biologischen Wasseranreicherungseinheit, dem Denitrifikations-Biofilter und dem Nitrifikations-Biofilter verbunden. Der erste Eingang der Abführungseinheit zur Abführung von Abwasser und Sedimenten aus der biologischen Wasseranreicherungseinheit, dem Denitrifikations-Biofilter und dem Nitrifikations-Biofilter ist mit dem ersten Ausgang des Belüftungskanals verbunden. Der zweite Ausgang des Belüftungskanals ist mit dem Eingang der UV-Bestrahlungseinheit verbunden. Der zweite Eingang der UV-Bestrahlungseinheit ist mit dem ersten Ausgang der Wasserparameterüberwachungs- und -steuereinheit daten-schalttechnisch verbunden. Der Ausgang der UV-Bestrahlungseinheit ist mit dem Eingang des Boilers verbunden. Der zweite Eingang des Boilers ist mit dem dritten Ausgang der Wasserparameterüberwachungs- und -steuereinheit daten-schalttechnisch verbunden. Der Eingang der Wasserparameterüberwachungs- und -steuereinheit ist mit dem dritten Ausgang des Belüftungskanals daten-schalttechnisch verbunden. Der zweite Ausgang der Wasserparameterüberwachungs- und -steuereinheit ist mit dem Eingang der Wasser-pH-Stabilisiereinheit daten-schalttechnisch verbunden. Der Ausgang der Wasser-pH-Stabilisiereinheit ist mit dem sechsten Eingang des Belüftungskanals daten-schalttechnisch verbunden. Der Ausgang des Boilers ist mit dem Eingang der Hauptpumpe verbunden. Der Ausgang der Hauptpumpe ist mit dem ersten Eingang mindestens eines Fischtanks verbunden. Der erste Ausgang des ersten Luftverdichters ist mit dem zweiten Eingang des Denitrifikations-Biofilters verbunden. Der zweite Ausgang des ersten Luftverdichters ist mit dem ersten Eingang des Nitrifikations-Biofilters verbunden. Der dritte Ausgang des ersten Luftverdichters ist mit dem zweiten Eingang des Belüftungskanals verbunden. Der Ausgang des zweiten Luftverdichters ist mit dem zweiten Eingang mindestens eines Fischtanks verbunden. Der zweite Ausgang mindestens eines Fischtanks ist mit dem ersten Eingang des Wasserreservetanks verbunden. Der erste Ausgang des Wasserreservetanks ist mit dem vierten Eingang des Wasser-Stabilisiertanks verbunden. Der zweite Ausgang des Wasserreservetanks ist mit dem dritten Eingang der Füllstandautomatikeinheit daten-schalttechnisch verbunden. Der zweite Eingang des Wasserreservetanks ist mit dem zweiten Ausgang der Füllstandautomatikeinheit daten-schalttechnisch verbunden. Der dritte Ausgang der Füllstandautomatikeinheit ist mit dem zweiten Eingang des ersten Verschlusses daten-schalttechnisch verbunden. Der Ausgang des ersten Verschlusses ist mit dem vierten Eingang des Belüftungskanals verbunden. Der vierte Ausgang der Füllstandautomatikeinheit ist mit dem zweiten Eingang des zweiten Verschlusses daten-schalttechnisch verbunden. Der Ausgang des zweiten Verschlusses ist mit dem fünften Eingang des Belüftungskanals verbunden. Der fünfte Ausgang der Füllstandautomatikeinheit ist mit dem zweiten Eingang des dritten Verschlusses daten-schalttechnisch verbunden. Der zweite Eingang der Füllstandautomatikeinheit ist mit dem vierten Ausgang des Belüftungskanals daten-schalttechnisch verbunden.

Dieser nächstliegende Stand der Technik gilt als Prototypanlage.

Die Prototypanlage ist durch die niedrige Besatzdichte der Speisefischarten benachteiligt.

Die durch die beanspruchte technische Lösung zu lösende Aufgabe ist die Entwicklung eines Mittels, um die Züchtung von Speisefischarten in geschlossenen Kreislaufanlagen mit einer großen wirtschaftlichen Effizienz und einem hohen Grad an ökologischer Sicherheit sicherzustellen.

Der erwartete technische Effekt der angemeldeten Anlage ist die erhöhte Besatzdichte der Speisefischarten.

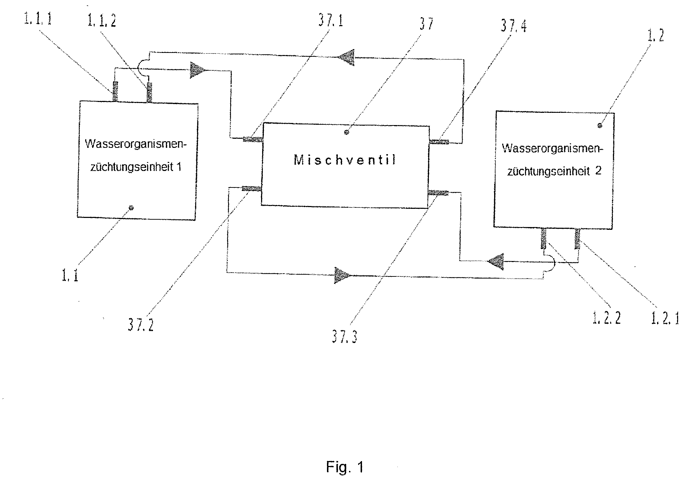

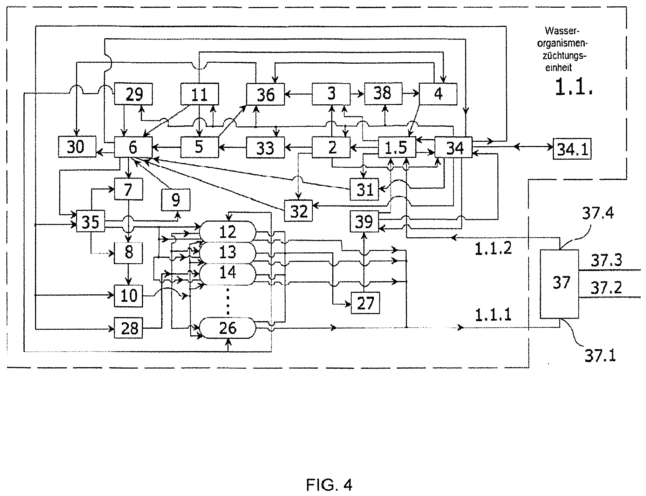

Der angemeldete technische Effekt ist wie folgt erreicht.
Die geschlossene Kreislaufanlage zur Züchtung von Speisefischen ist dadurch gekennzeichnet, dass sie folgende Baugruppen enthält:
- mindestens eine erste Wasserorganismenzüchtungseinheit 1.1 (Fig. 1 - Fig. 3) und eine zweite Wasserorganismenzüchtungseinheit 1.2 (Fig. 1 - Fig. 3), die miteinander mittels eines Zwangswasseraustausches über ein Mischventil 37 (Fig. 1) zusammenwirken. Jede Wasserorganismenzüchtungseinheit umfasst einen Wasser-Stabilisiertank 1.5 (Fig. 4) mit einem ersten, einem zweiten und einem dritten Eingang, einem ersten, einem zweiten und einem dritten Ausgang, einem Daten-Schalteingang und einem Daten-Schaltausgang,
- eine mechanische Filterungseinheit 2 (Fig. 4) mit einem ersten, einem zweiten und einem dritten Ausgang, einem Eingang, einem Daten-Schalteingang und einem Daten-Schaltausgang,
- eine biologische Wasseranreicherungseinheit 3 (Fig. 4) mit einem ersten und einem zweiten Ausgang und einem ersten und einem zweiten Eingang,
- einen Denitrifikations-Biofilter 4 (Fig. 4) mit einem ersten und einem zweiten Ausgang und einem ersten und einem zweiten Eingang,
- einen Nitrifikations-Biofilter 5 (Fig. 4) mit einem ersten und einem zweiten Ausgang und einem ersten und einem zweiten Eingang,
- einen Belüftungskanal 6 (Fig. 4) mit einem ersten und einem zweiten Ausgang, einem ersten und einem zweiten Daten-Schaltausgang und einem ersten, einem zweiten, einem dritten, einem vierten, einem fünften und einem sechsten Eingang,
- eine UV-Bestrahlungseinheit 7 (Fig. 4) mit einem Eingang, einem Daten-Schalteingang und einem Ausgang,
- einen Boiler 8 (Fig. 4) mit einem Ausgang, einem Eingang und einem Daten-Schalteingang,
- eine Wasser-pH-Stabilisiereinheit 9 (Fig. 4) mit einem Ausgang und einem Daten-Schalteingang,
- eine Pumpe 10 (Fig. 4) mit einem Daten-Schalteingang, einem Eingang und einem Ausgang,
- einen ersten Luftverdichter 11 (Fig. 4) mit einem ersten, einem zweiten und einem dritten Ausgang und einem Daten-Schalteingang,
- mindestens einen Fischtank 12 - 26 (Fig. 4) mit einem ersten, einem zweiten und einem dritten Eingang, einem Daten-Schalteingang und mit einem ersten und einem zweiten Ausgang,
- einen Wasserreservetank 27 (Fig. 4) mit einem Eingang und einem Ausgang,
- einen zweiten Luftverdichter 28 (Fig. 4) mit einem Daten-Schalteingang und einem Ausgang,
- eine Frischwasserzugabe-Einheit 29 (Fig. 4) mit einem Daten-Schalteingang und mit einem ersten und einem zweiten Ausgang,
- eine Abführungseinheit zur Abführung von Abwasser und Sedimenten aus der biologischen Wasseranreicherungseinheit, dem Denitrifikations-Biofilter und dem Nitrifikations-Biofilter 30 (Fig. 4) mit einem ersten und einem zweiten Eingang,
- einen ersten Verschluss 31 (Fig. 4) mit einem Ausgang, einem Eingang und einem Daten-Schalteingang,
- einen zweiten Verschluss 32 (Fig. 4) mit einem Ausgang, einem Eingang und einem Daten-Schalteingang,
- einen dritten Verschluss 33 (Fig. 4) mit einem Ausgang, einem Eingang und einem Daten-Schalteingang,
- eine Füllstandautomatikeinheit 34 (Fig. 4) mit einem ersten, einem zweiten, einem dritten und einem vierten Daten-Schalteingang, einem ersten, einem zweiten, einem dritten, einem vierten und einem fünften Daten-Schaltausgang und einem ersten und einem zweiten Daten-Schalt-Eingang/-ausgang,
- eine Wasserparameterüberwachungs- und -steuereinheit 35 (Fig. 4) mit einem ersten, einem zweiten, einem dritten und einem vierten Daten-Schaltausgang, einem Daten-Schalteingang und einem Daten-Schalteingang/-ausgang,
- eine Absaugpumpe zur Förderung von Sedimenten aus der biologischen Wasseranreicherungseinheit, dem Denitrifikations-Biofilter und dem Nitrifikations-Biofilter 36 (Fig. 4) mit einem Ausgang, einem ersten, einem zweiten und einem dritten Eingang und einem Daten-Schalteingang,
- eine Pumpe 38 der biologischen Wasseranreicherungseinheit (Fig. 4) mit einem Eingang, einem Ausgang und einem Daten-Schalteingang.

Dabei ist der dritte Ausgang des Wasser-Stabilisiertanks 1.5 (Fig. 4) mit dem zweiten Eingang der biologischen Wasseranreicherungseinheit 3 (Fig. 4) verbunden. Der zweite Ausgang des Wasser-Stabilisiertanks 1.5 (Fig. 4) ist mit dem ersten Eingang der mechanischen Filterungseinheit 2 (Fig. 4) verbunden. Der Daten-Schaltausgang der mechanischen Filterungseinheit 2 ist mit dem zweiten Daten-Schalteingang der Füllstandautomatikeinheit 34 (Fig. 4) verbunden. Der Daten-Schalteingang der mechanischen Filterungseinheit 2 (Fig. 4) ist mit dem zweiten Ausgang der Füllstandautomatikeinheit 34 (Fig. 4) verbunden. Der erste Ausgang des Wasser-Stabilisiertanks 1.5 (Fig. 4) ist mit dem Eingang des ersten Verschlusses 31 (Fig. 4) verbunden. Der Daten-Schalteingang des ersten Verschlusses 31 ist mit dem dritten Daten-Schaltausgang der Füllstandautomatikeinheit 34 (Fig. 4) verbunden. Der Daten-Schaltausgang des Wasser-Stabilisiertanks 1.5 (Fig. 4) ist mit dem ersten Daten-Schalteingang der Füllstandautomatikeinheit 34 (Fig. 4) verbunden. Der zweite Eingang des Wasser-Stabilisiertanks 1.5 (Fig. 4) ist mit dem zweiten Ausgang des Mischventils 37 (Fig. 4) verbunden. Der dritte Eingang des Wasser-Stabilisiertanks 1.5 (Fig. 4) ist mit dem ersten Ausgang des Denitrifikations-Biofilters 4 (Fig. 4) verbunden. Der zweite Ausgang des Denitrifikations-Biofilters 4 (Fig. 4) ist mit dem zweiten Eingang der Absaugpumpe zur Abförderung von Sedimenten aus der biologischen Wasseranreicherungseinheit, dem Denitrifikations-Biofilter und dem Nitrifikations-Biofilter 36 (Fig. 4) verbunden. Der Daten-Schalteingang des Wasser-Stabilisiertanks 1.5 (Fig. 4) ist mit dem ersten Daten-Schaltausgang der Füllstandautomatikeinheit 34 (Fig. 4) verbunden. Der dritte Ausgang der mechanischen Filterungseinheit 2 (Fig. 4) ist mit dem Eingang des zweiten Verschlusses 32 (Fig. 4) verbunden. Der Daten-Schalteingang des zweiten Verschlusses 32 ist mit dem vierten Daten-Schaltausgang der Füllstandautomatikeinheit 34 (Fig. 4) verbunden. Der zweite Ausgang der mechanischen Filterungseinheit 2 (Fig. 4) ist mit dem Eingang des dritten Verschlusses 33 (Fig. 4) verbunden. Der Daten-Schalteingang des dritten Verschlusses 33 ist mit dem zweiten Daten-Schaltausgang der Füllstandautomatikeinheit 34 (Fig. 4) verbunden. Der erste Ausgang der mechanischen Filterungseinheit 2 (Fig. 4) ist mit dem ersten Eingang der biologischen Wasseranreicherungseinheit 3 (Fig. 4) verbunden. Der erste Ausgang der biologischen Wasseranreicherungseinheit 3 (Fig. 4) ist mit dem Eingang der Pumpe der biologischen Wasseranreicherungseinheit 38 (Fig. 4) verbunden. Der Ausgang der Pumpe ist mit dem zweiten Eingang des Denitrifikations-Biofilters 4 (Fig. 4) verbunden, und ihr Daten-Schalteingang ist mit dem zweiten Daten-Schaltausgang der Füllstandautomatikeinheit 34 (Fig. 4) verbunden. Der zweite Ausgang der biologischen Wasseranreicherungseinheit 3 (Fig. 4) ist mit dem dritten Eingang der Absaugpumpe zur Förderung von Sedimenten aus der biologischen Wasseranreicherungseinheit, dem Denitrifikations-Biofilter und dem Nitrifikations-Biofilter 36 (Fig. 4) verbunden. Sein Daten-Schalteingang ist mit dem zweiten Daten-Schaltausgang der Füllstandautomatikeinheit 34 (Fig. 4) verbunden. Der Ausgang des dritten Verschlusses 33 (Fig. 4) ist mit dem ersten Eingang des Nitrifikations-Biofilters 5 (Fig. 4) verbunden. Der zweite Eingang des Nitrifikations-Biofilters 5 (Fig. 4) ist mit dem ersten Ausgang des ersten Luftverdichters 11 (Fig. 4) verbunden. Der erste Ausgang des Nitrifikations-Biofilters 5 (Fig. 4) ist mit dem ersten Eingang der Absaugpumpe zur Förderung von Sedimenten aus der biologischen Wasseranreicherungseinheit, dem Denitrifikations-Biofilter und dem Nitrifikations-Biofilter 36 (Fig. 4) verbunden. Der zweite Ausgang des Nitrifikations-Biofilters 5 (Fig. 4) ist mit dem vierten Eingang des Belüftungskanals 6 (Fig. 4) verbunden. Der zweite Ausgang des ersten Luftverdichters 11 (Fig. 4) ist mit dem fünften Eingang des Belüftungskanals 6 (Fig. 4) verbunden. Der dritte Ausgang des ersten Luftverdichters 11 (Fig. 4) ist mit dem ersten Eingang des Denitrifikations-Biofilters 4 (Fig. 4) verbunden. Der Daten-Schalteingang des ersten Luftverdichters 11 (Fig. 4) ist mit dem zweiten Daten-Schaltausgang der Füllstandautomatikeinheit 34 (Fig. 4) verbunden. Der Ausgang des ersten Verschlusses 31 (Fig. 4) ist mit dem dritten Eingang des Belüftungskanals 6 (Fig. 4) verbunden. Der Ausgang des zweiten Verschlusses 32 (Fig. 4) ist mit dem zweiten Eingang des Belüftungskanals 6 (Fig. 4) verbunden. Der zweite Ausgang der Frischwasserzugabe-Einheit 29 (Fig. 4) ist mit dem sechsten Eingang des Belüftungskanals 6 (Fig. 4) verbunden. Der erste Ausgang der Frischwasserzugabe-Einheit 29 (Fig. 4) ist mit dem dritten Eingang mindestens eines Fischtanks 12-26 (Fig. 4) verbunden. Der Daten-Schalteingang der Frischwasserzugabe-Einheit 29 (Fig. 4) ist mit dem zweiten Daten-Schaltausgang der Füllstandautomatikeinheit 34 (Fig. 4) verbunden. Der zweite Ausgang des Belüftungskanals 6 (Fig. 4) ist mit dem ersten Eingang der Abführungseinheit zur Abführung von Abwasser und Sedimenten aus der biologischen Wasseranreicherungseinheit, dem Denitrifikations-Biofilter und dem Nitrifikations-Biofilter 30 (Fig. 4) verbunden. Der zweite Eingang der biologischen Wasseranreicherungseinheit, des Denitrifikations-Biofilters und des Nitrifikations-Biofilters 30 (Fig. 4) ist mit dem Ausgang der Absaugpumpe zur Förderung von Sedimenten aus der biologischen Wasseranreicherungseinheit, dem Denitrifikations-Biofilter und dem Nitrifikations-Biofilter 36 (Fig. 4) verbunden. Der erste Eingang des Belüftungskanals 6 (Fig. 4) ist mit dem Ausgang der pH-Stabilisiereinheit 9 (Fig. 4) verbunden. Der erste Daten-Schaltausgang des Belüftungskanals 6 (Fig. 4) ist mit dem vierten Daten-Schalteingang der Füllstandautomatikeinheit 34 (Fig. 4) daten-schalttechnisch verbunden. Der zweite Daten-Schaltausgang des Belüftungskanals 6 (Fig. 4) ist mit dem Daten-Schalteingang der Wasserparameterüberwachungs- und -steuereinheit 35 (Fig. 4) verbunden. Der erste Ausgang des Belüftungskanals 6 (Fig. 4) ist mit dem Eingang der UV-Bestrahlungseinheit 7 (Fig. 4) verbunden. Der Daten-Schalteingang der UV-Bestrahlungseinheit 7 (Fig. 4) ist mit dem vierten Daten-Schaltausgang der Wasserparameterüberwachungs- und -steuereinheit 35 (Fig. 4) verbunden. Der Ausgang der UV-Wasserbestrahlungseinheit 7 (Fig. 4) ist mit dem Eingang des Boilers 8 (Fig. 4) verbunden. Der Daten-Schalteingang/-ausgang der Wasserparameterüberwachungs- und -steuereinheit 35 (Fig. 4) ist mit dem ersten Daten-Schalteingang/-ausgang der Füllstandautomatikeinheit 34 (Fig. 4) verbunden. Der erste Daten-Schaltausgang der Wasserparameterüberwachungs- und -steuereinheit 35 (Fig. 4) ist mit dem Daten-Schalteingang der Wasser-pH-Stabilisiereinheit 9 (Fig. 4) verbunden. Der zweite Daten-Schaltausgang der Füllstandautomatikeinheit 35 (Fig. 4) ist mit dem Daten-Schalteingang mindestens eines Fischtanks 12 - 26 (Fig. 4) verbunden. Der dritte Daten-Schaltausgang der Wasserparameterüberwachungs- und -steuereinheit 35 (Fig. 4) ist mit dem Daten-Schalteingang des Boilers 8 (Fig. 4) verbunden. Der Ausgang des Boilers 8 (Fig. 4) ist mit dem Eingang der Pumpe 10 (Fig. 4) verbunden. Der Daten-Schalteingang der Pumpe 10 (Fig. 4) ist mit dem ersten Daten-Schalteingang/-ausgang der Füllstandautomatikeinheit 34 (Fig. 4) verbunden. Der Ausgang der Pumpe 10 (Fig. 4) ist mit dem zweiten Eingang mindestens eines Fischtanks 12 - 26 (Fig. 4) verbunden. Der Daten-Schalteingang des zweiten Luftverdichters 28 (Fig. 4) ist mit dem ersten Daten-Schalteingang/-ausgang der Füllstandautomatikeinheit 34 (Fig. 4) verbunden. Der Ausgang des zweiten Luftverdichters 28 (Fig. 4) ist mit dem ersten Eingang mindestens eines Fischtanks 12 - 26 (Fig. 4) verbunden. Der erste Ausgang mindestens eines Fischtanks 12 - 26 (Fig. 4) ist mit dem Eingang des Wasserreservetanks 27 (Fig. 4) verbunden. Der Ausgang des Wasserreservetanks 27 (Fig. 4) ist mit dem Eingang der Pumpe des Wasserreservetanks 39 (Fig. 4) verbunden. Der Ausgang der Pumpe des Wasserreservetanks 39 (Fig. 4) ist mit dem ersten Eingang des Wasser-Stabilisiertanks 1.5 (Fig. 4) verbunden. Der Daten-Schaltausgang der Pumpe des Wasserreservetanks 39 (Fig. 4) ist mit dem dritten Daten-Schalteingang der Füllstandautomatikeinheit 34 (Fig. 4) verbunden. Der Daten-Schalteingang der Pumpe des Wasserreservetanks 39 (Fig. 4) ist mit dem fünften Ausgang der Füllstandautomatikeinheit 34 (Fig. 4) verbunden. Der zweite Ausgang mindestens eines Fischtanks 12 - 26 (Fig. 4) ist mit dem Eingang 1.1.2 (Fig. 4) des Mischventils 37 (Fig. 4) verbunden. Der zweite Daten-Schalteingang/-ausgang der Füllstandautomatikeinheit 34 (Fig. 4) ist mit dem Daten-Schalteingang/-ausgang eines IBM-kompatiblen Personalcomputers mit der darauf installierten Software "Steuerprogramm für verfahrenstechnische Prozesse in modernen Fischzuchtanlagen" verbunden.

### Liste der Bezugszeichen

- 1: Wasserorganismenzüchtungseinheit
1.1 Erste Wasserorganismenzüchtungseinheit
1.1.1 Ausgang der ersten Wasserorganismenzüchtungseinheit
1.1.2 Eingang der Wasserorganismenzüchtungseinheit
1.2 Zweite Wasserorganismenzüchtungseinheit
1.2.1 Ausgang der zweiten Wasserorganismenzüchtungseinheit
1.2.2 Eingang der zweiten Wasserorganismenzüchtungseinheit
1.3 Dritte Wasserorganismenzüchtungseinheit
1.3.1 Ausgang der dritten Wasserorganismenzüchtungseinheit
1.3.2 Eingang der dritten Wasserorganismenzüchtungseinheit
1.4 Vierte Wasserorganismenzüchtungseinheit
1.4.1 Ausgang der vierten Wasserorganismenzüchtungseinheit
1.4.2 Eingang der vierten Wasserorganismenzüchtungseinheit
1.5 Wasser-Stabilisiertank
- 2: Mechanische Filterungseinheit
- 3: Biologische Wasseranreicherungseinheit
- 4: Denitrifikations-Biofilter
- 5: Nitrifikations-Biofilter
- 6: Belüftungskanal
- 7: UV-Bestrahlungseinheit
- 8: Boiler
- 9: Wasser-pH-Stabilisiereinheit
- 10: Pumpe
- 11: Erster Luftverdichter
- 12: Erster Fischtank
- 13: Zweiter Fischtank
- 14: Dritter Fischtank
- 15: Vierter Fischtank
- 16: Fünfter Fischtank
- 17: Sechster Fischtank
- 18: Siebenter Fischtank
- 19: Achter Fischtank
- 20: Neunter Fischtank.
- 21: Zehnter Fischtank
- 22: Elfter Fischtank
- 23: Zwölfter Fischtank
- 24: Dreizehnter Fischtank
- 25: Vierzehnter Fischtank
- 26: Fünfzehnter Fischtank
- 27: Wasserreservetank
- 28: Zweiter Luftverdichter
- 29: Frischwasserzugabe-Einheit
- 30: Abführungseinheit zur Abführung von Abwasser und Sedimenten aus der biologischen Wasseranreicherungseinheit, dem Denitrifikations-Biofilter und dem Nitrifikations-Biofilter
- 31: Erster Verschluss
- 32: Zweiter Verschluss
- 33: Dritter Verschluss
- 34: Füllstandautomatikeinheit
34.1 IBM-kompatibler Personalcomputer
- 35: Wasserparameterüberwachungs- und -steuereinheit
- 36: Absaugpumpe zur Förderung von Sedimenten aus der biologischen Wasseranreicherungseinheit, dem Denitrifikations-Biofilter und dem Nitrifikations-Biofilter
- 37: Mischventil
37.1 Erster Eingang des Mischventils
37.2 Erster Ausgang des Mischventils
37.3 Zweiter Eingang des Mischventils
37.4 Zweiter Ausgang des Mischventils
37.5 Dritter Eingang des Mischventils
37.6 Dritter Ausgang des Mischventils
37.7 Vierter Eingang des Mischventils
37.8 Vierter Ausgang des Mischventils
- 38: Pumpe der biologischen Wasseranreicherungseinheit
- 39: Pumpe des Wasserreservetanks

Das Ziel einer Fischzuchtfarm ist es, möglichst viel Speisefisch mit einer festgelegten Speisefischeinwaage bei minimalen Züchtungskosten zu produzieren. Während der Planung von Fischzuchtanlagen werden solche Faktoren berücksichtigt, die sowohl die sichere Fischzüchtung sicherstellen als auch die Wachstumsrate der Speisefischproduktion beeinflussen. Unterschiedliche Abweichungen der Wassermediumkenndaten von den optimalen Parametern hinsichtlich der Züchtung von Wasserorganismen setzen die Fische einem Stress aus. Die Auswirkungen sind dabei Fischsterben, Fischerkrankungen sowie wesentliche Wachstumsabschwächung.

Um die oben genannten Risiken zu vermeiden, sind die Wasseraufbereitungssysteme der geschlossenen Kreislaufanlagen (GKA) mit verschiedenen wirksamen Mitteln zur Überwachung der Wasserkenndaten ausgestattet. Die Reinigungsausrüstung für die Wasserorganismenzüchtungseinheiten wird dabei für die höchsten Belastungen hinsichtlich des durch den Fisch verbrauchten Futters ausgelegt.

Während der Züchtung von Speisefisch lassen sich einige Zyklen seiner Entwicklung unterscheiden. Jeder Zyklus ist durch gewisse Besonderheiten und Einschränkungen gekennzeichnet.

So wird der Fisch einer Art und einer Einwaage während der Züchtung in einzelnen Fischtanks gehalten. Die Fischtanks gehören zu verschiedenen Wasserorganismenzüchtungseinheiten. Dabei soll bemerkt werden, dass dieselbe Wasserorganismenzüchtungseinheit zur Fischzüchtung über die gesamte Zuchtdauer von Setzlingen und Jungfischen bis zu einwaagereifem Fisch benutzt wird. Für die Setzlinge sowie die Jungfische (d. h. Fische im ersten bis zweiten Zuchtjahr) gelten Einschränkungen (Besatzdichte pro Quadratmeter des Fischtankwasserspiegels) hinsichtlich der Menge, die gleichzeitig gezüchtet werden kann. Diese Einschränkung bedingt aber die unvollständige Auslastung der Ausrüstung der Wasserorganismen-züchtungseinheit während des gesamten Speisefischzüchtungszyklus in der GKA.

Die Haupteinflussgröße des Ist-Zustands der in der GKA gezüchteten Fische ist die Konzentration von Ammoniakstickstoff, Ammoniak und der durch die Fische während des Futterverbrauchs ausgeschiedenen Kohlensäure im Wasser. Die zweitwichtigsten Parameter nach der Beseitigung von Ammoniakstickstoff in Biofiltern sind die Konzentration von Nitriten und Nitraten im Wasser und der pH-Wert von Wasser. Diese Parameter beeinflussen den Ist-Zustand der gezüchteten Fische.

Die Konzentration von Ammoniakstickstoff im Wasser der GKA überschreitet die zulässigen Sollwerte (Grenzwerte) in der Regel nach der Reinigung der Nitrifikationsanlage in der Wasserorganismenzüchtungseinheit. Die Nitrifikationsanlage braucht normalerweise 3 bis 4 Tage, um die Bakterienkolonien der Nitrifikationsanlagen zu erneuen. Die Konzentrationsabweichungen entstehen auch bei verschiedenen technischen Ausfällen sowie bei Abweichungen von den Normalbetriebsdaten der Systeme der Wasserorganismenzüchtungseinheit und in der Ausrüstung der GKA. Es sei auch bemerkt, dass das Futter innerhalb von 15 bis 20 Minuten nach seiner Zufuhr in den Zuchttank gefressen wird. Danach erfolgt ein mächtiger Ausstoß von Ammoniakstickstoff in das Wasser. Die Ammoniakstickstoff-Konzentration überschreitet die mittleren Auslegewerte um das 3,1- bis 3,4-fache. Der Betrieb der Nitrifikationsanlage der Wasserorganismenzüchtungseinheit in der GKA kann solche Ausstöße sowie die Abweichungen der Wasserparameter von den optimalen Daten nicht sofort ausgleichen. Das ist durch die bekannten Einschränkungen im Betrieb der Prozessausrüstung und vor allem durch ihre Trägheit bedingt.

Folglich bestehen die Möglichkeiten der Erledigung des gestellten technischen Problems gemäß der beanspruchten technischen Lösung darin, dass hohe Fischbesatzdichten erreicht werden. Das führt dazu, dass die Menge der gezüchteten Fische in verschiedenen Phasen des Züchtungsvorgangs zunimmt. Das wird dank der Ausnutzung der unterbelasteten Wasserorganismenzüchtungseinheiten, einer Zeitverschiebung beim Füttern der Fische in den Wasserorganismenzüchtungseinheiten der GKA und dank der Realisierung des Steuerprogramms für verfahrenstechnische Prozesse des Betriebs der Wasseraufbereitungsausrüstung der Wasserorganismenzüchtungseinheiten erreicht. Die Gesamtheit dieser Faktoren ermöglicht es, die negative Auswirkung von hohen Konzentrationen an Ammoniakstickstoff (Ammoniak, Nitrite, Nitrate und Kohlensäure), die die Fischzuchtprozesse in der GKA immer begleiten, zu minimieren.

### Beispiel 1

Der sibirische Stör wird in zwei Wasserorganismenzüchtungseinheiten, und zwar in der ersten 1.1 und in der zweiten 1.2 (Fig. 1) mit einer Wassermenge von 1200 m³ gezüchtet. (Ein Fischtank 12 (Fig. 4) gehört zur Wasserorganismenzüchtungseinheit 1.1 (Fig. 1) und ist 1,5 m tief). 15 Fischtanks 12 - 26 (Fig. 4) je 1,5 m tief gehören zur zweiten Wasserorganismenzüchtungseinheit 1.2 (Fig. 1). Dabei enthält jeder der erwähnten Fischtanks 12 - 26 (Fig. 4) je 80 m³ Wasser. Die erste Wasserorganismenzüchtungseinheit 1.1 (Fig. 1) enthält sibirische Störe im vierten Züchtungsjahr mit einer durchschnittlichen Einwaage von 15,8 kg. (Die Gesamtfischmasse beträgt 96 Tonnen). Die zweite Wasserorganismen-züchtungseinheit 1.2 (Fig. 1) enthält sibirische Störe im dritten Züchtungsjahr mit einer durchschnittlichen Einwaage von 10,2 kg. (Die Gesamtfischmasse beträgt 62 Tonnen). Die entsprechenden Angaben in Bezug auf die Züchtung der sibirischen Störe jeweils für die erste Wasserorganismenzüchtungseinheit 1.1 (Fig. 1) und die zweite Wasserorganismenzüchtungseinheit 1.2 (Fig. 1) sind in Tabelle 1 enthalten. Die Wassertemperatur in den Fischtanks 12 - 26 (Fig. 4) der genannten ersten Wasserorganismenzüchtungseinheit 1.1 (Fig. 1) und zweiten Wasserorganismenzüchtungseinheit 1.2 (Fig. 1) beträgt jeweils 25° C. Der Wasser-pH-Wert beträgt 7,1.

**Tabelle 1**

| **Nr.** | **Parameter** | **Wasserorganismenzüchtungseinheit 1.1 (****Fig. 1****)** | **Wasserorganismenzüchtungseinheit 1.2 (****Fig. 1****)** |
|---|---|---|---|
| 1 | Fischbestand | 1 | 2 |
| 2 | Fischalter, Jahre | 4 | 3 |
| 3 | Fischbiomasse, Tonnen | 96 | 62 |
| 4 | Besatzdichte , kg/m² | 120 | 78 |
| 5 | Futter, kg/Tag | 434 | 280 |
| 6 | NH₃-Konzentration, durchschnittlich, ml/l | 0,68 | 0,44 |
| 7 | NH₄-Ist-Konzentration, mg/l | 2,10 | 1,36 |
| 8 | Ammoniak-NH₃-Konzentration, mg/l (Grenzwert 0,02 mg/l, zulässig 0,015 mg/l) | 0,016 | 0,010 |
| 9 | NH₄-Konzentration 15 Minuten nach der Fütterung, mg/Liter | 2,10 | 1,36 |
| 10 | NH₄-Konzentration 60 Minuten nach der Fütterung, mg/Liter | 1,46 | 0,94 |
| 11 | NH₄-Konzentration 120 Minuten nach der Fütterung, mg/l | 1,03 | 0,67 |
| 12 | NH₄-Konzentration 180 Minuten nach der Fütterung, mg/l | 0,82 | 0,53 |

Aus der Tabelle 1 geht hervor, dass die Wasserorganismenzüchtungseinheit 1.1 (Fig. 1) bei solchen Konzentrationen betrieben wird, die die zulässigen Spitzenkonzentrationen von Ammoniak (NH₃) im Wasser überschreiten. Die zweite Wasserorganismenzüchtungseinheit 1.2 (Fig. 1) hat eine Reserve hinsichtlich dieses wichtigen Parameters. Diese ist aber nicht gefragt (nicht vollständig ausgenutzt), weil der Fisch die benötigte verkaufsfertige Einwaage nicht erreicht hat. Es sei betont, dass die Ausnutzung der vorhandenen Reserve in Bezug auf die Ammoniak-Spitzenkonzentrationen im Wasser in der zweiten Wasserorganismenzüchtungseinheit 1.2 (Fig. 1) es ermöglicht, die Besatzdichte des sibirischen Störs in der ersten Wasserorganismenzüchtungseinheit 1.1 (Fig. 1) und folglich auch insgesamt in der vorgeschlagenen Anlage zu steigern.

Diese Reserve der Besatzdichteerhöhung des sibirischen Störs wird in der beanspruchten Anlage wie folgt ausgenutzt. Das Wasser aus dem Ausgang des ersten Fischtanks 12 (Fig. 4) der ersten Wasserorganismenzüchtungseinheit 1.1 (Fig. 1) fließt über den Ausgang 1.1.1 der letzteren (Fig. 1) zum ersten Eingang 37.1 (Fig. 1) des Mischventils 37 (Fig. 1). Das Wasser aus den Ausgängen sämtlicher 15 Fischtanks 12 - 26 (Fig. 4) der zweiten Wasserorganismenzüchtungseinheit 1.2 (Fig. 1) fließt vom Ausgang der letzteren 1.2.1 (Fig. 1) zum zweiten Eingang 37.3 (Fig. 1) des Mischventils 37 (Fig. 1).

Vom ersten Ausgang 37.4 (Fig. 1) des Mischventils 37 (Fig. 1) fließt das Wasser über 1.1.2 (Fig. 1) an den zweiten Eingang des Wasser-Stabilisiertanks 1.5 (Fig. 4) der ersten Wasserorganismenzüchtungseinheit 1.1 (Fig. 1). Das Wasser vom zweiten Ausgang 37.2 (Fig. 1) des Mischventils 37 (Fig. 1) fließt über 1.1.2 zum zweiten Eingang des Wasser-Stabilisiertanks 1.5 (Fig. 4) der zweiten Wasserorganismenzüchtungseinheit 1.2 (Fig. 1).

Der Tabelle 2 sind die Vergleichsergebnisse der Versuche der vorgeschlagenen Anlage und der Prototypvorrichtung entnehmbar, die nachweisen, dass der technische Effekt der Erfindung, und zwar die erhöhte Fischbesatzdichte, erreicht wird.

**Tabelle 2**

| **Parameter** | **Beanspruchte Anlage** | | **Prototypvorrichtung** | |
|---|---|---|---|---|
| | Wasserorganismenzüchtungseinheit 1.1 (Fig. 1) | Wasserorganismenzüchtungseinheit 1.2 (Fig. 1) | 1. Wasserorganismenzüchtungseinheit | 2. Wasserorganismenzüchtungseinheit |
| Mischventil vorhanden | 1 | | nein | nein |
| Grenzwert NH₄-Konzentration, mg/l | 3,85 | 3,85 | 3,85 | 3,85 |
| NH₄-Ist- Konzentration, mg/l | 2,10 | 1,36 | 2,10 | 1,36 |
| Durchschnittliche NH₄-Konzentration, mg/l | 1,73 | | 2,10 | 1,36 |
| Ammoniak-NH₃-Ist-Konzentration, mg/l (Grenzwert 0,02 mg/l, zulässig 0,015 mg/l) | 0,013 | | 0,016 | 0,010 |
| Reserve je nach der durchschnittlichen NH₄-Konzentration (umgerechnet auf die Differenz zwischen der NH₃-Betriebskonzentration und der NH₃-Ist-Konzentration), mg/Liter | 0,220 | | | |
| Futter, kg/Tag | 574 | 280 | 434 | 280 |
| FischBesatzdichte, kg/m² | 160 | 78 | 120 | 72 |

Aus den Ergebnissen der Vergleichsversuche gemäß der Tabelle 2 unter Einsatz der beanspruchten Anlage und der Prototypvorrichtung geht hervor, dass die beanspruchte Anlage den technischen Effekt der Erfindung sicher gewährleistet (die erhöhte Fischbesatzdichte beträgt 31%).

### Beispiel 2

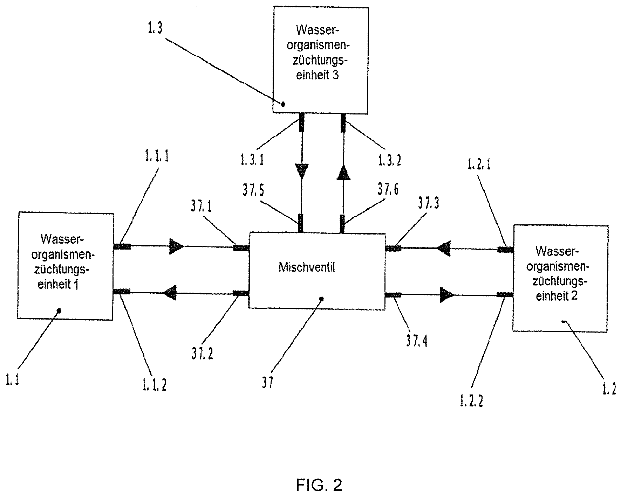

Der Waxdick wird in drei Wasserorganismenzüchtungseinheiten 1.1, 1.2 und 1.3 (Fig. 2) gezüchtet mit einer Wassermenge von jeweils
- 1300 m³ (fünf 1,5 m tiefe Fischtanks 12 - 15 (Fig. 4) mit einem Inhalt von je 260 m³)
- 1400 m³ (fünfzehn Fischtanks 12 - 26 (Fig. 4) mit unterschiedlichen Konfigurationen:
   - ein 1 m tiefer Fischtank mit einem Inhalt von 30 m³,
   - ein 1,2 m tiefer Fischtank mit einem Inhalt von 50 m³,
   - ein 1,5 m tiefer Fischtank mit einem Inhalt von 60 m³,
   - ein 1,5 m tiefer Fischtank mit einem Inhalt von 40 m³,
   - ein 1,5 m tiefer Fischtank mit einem Inhalt von 120 m³,
   - ein 1,5 m tiefer Fischtank mit einem Inhalt von 150 m³,
   - ein 1,2 m tiefer Fischtank mit einem Inhalt von 70 m³,
   - ein 1,3 m tiefer Fischtank mit einem Inhalt von 40 m³,
   - ein 1,3 m tiefer Fischtank mit einem Inhalt von 50 m³,
   - ein 1,3 m tiefer Fischtank mit einem Inhalt von 60 m³,
   - ein 2 m tiefer Fischtank mit einem Inhalt von 180 m³,
   - ein 2,2 m tiefer Fischtank mit einem Inhalt von 200 m³,
   - ein 1,6 m tiefer Fischtank mit einem Inhalt von 100 m³,
   - ein 2,1 m tiefer Fischtank mit einem Inhalt von 120 m³,
   - ein 1,4 m tiefer Fischtank mit einem Inhalt von 130 m³,
- 1100 m³ (zehn Fischtanks mit unterschiedlichen Konfigurationen:
- fünf je 2 m tiefe Fischtanks mit einem Inhalt von je 100 m³,
- ein 1,5 m tiefer Fischtank mit einem Inhalt von 120 m³,
   - ein 1,2 m tiefer Fischtank mit einem Inhalt von 180 m³,
   - ein 1,3 m tiefer Fischtank mit einem Inhalt von 60 m³,
   - ein 1,3 m tiefer Fischtank mit einem Inhalt von 50 m³ und
   - ein 1,3 m tiefer Fischtank mit einem Inhalt von 90 m³).

Die erste Wasserorganismenzüchtungseinheit 1.1 (Fig. 2) enthält den Waxdick im vierten Züchtungsjahr mit einer durchschnittlichen Einwaage von 12 kg und der gesamten Fischbiomasse von 102 Tonnen. Die zweite Wasserorganismenzüchtungseinheit 1.2 (Fig. 2) enthält den Waxdick im dritten Züchtungsjahr mit einer durchschnittlichen Einwaage von 8,3 kg und der gesamten Fischbiomasse von 48 Tonnen. Die dritte Wasserorganismenzüchtungseinheit 1.3 (Fig. 2) enthält den Waxdick mit einer durchschnittlichen Einwaage von 4,5 kg und der gesamten Fischbiomasse von 32 Tonnen.

Die Wassertemperatur in den Fischtanks 12 - 26 (Fig. 4) der ersten 1.1 (Fig. 2), der zweiten 1.2 (Fig. 2) und der dritten 1.3 (Fig. 2) Wasserorganismenzüchtungseinheit liegt bei 25° C, und der Wasser-pH-Wert beträgt 7,1.

Die Angaben zu Züchtungsparametern von Waxdick, getrennt für jede der Wasserorganismenzüchtungseinheiten 1.1 - 1.3 (Fig. 2), sind in der Tabelle 3 enthalten.

**Tabelle 3**

| **Nr.** | **Parameter** | **Wasserorganismenzüchtungseinheit 1.1 (****Fig. 2****)** | **Wasserorganismenzüchtungseinheit 1.2 (****Fig. 2****)** | **Wasserorganismenzüchtungseinheit 1.3 (****Fig. 2****)** |
|---|---|---|---|---|
| 1 | Fischbestand | 1 | 2 | 3 |
| 2 | Fischalter, Jahre | 4 | 3 | 2 |
| 3 | Fischbiomasse, Tonnen | 102 | 48 | 32 |
| 4 | Besatzdichte, kg/m² | 118 | 52 | 43 |
| 5 | Futter, kg/Tag | 459 | 289 | 315 |
| 6 | NH₄-Konzentration, durchschnittlich, mg/l | 0,66 | 0,39 | 0,54 |
| 7 | NH₄-Ist-Konzentration, mg/l | 2,05 | 1,20 | 1,66 |
| 8 | Ammoniak-NH₃-Konzentration, mg/l (Grenzwert 0,02 mg/l, zulässig 0,015 mg/l) | 0,016 | 0,009 | 0,013 |
| 9 | NH₄-Konzentration 15 Minuten nach der Fütterung, mg/l | 2,05 | 1,20 | 1,66 |
| 10 | NH₄-Konzentration 60 Minuten nach der Fütterung, mg/l | 1,43 | 0,83 | 1,16 |
| 11 | NH₄-Konzentration Minuten nach der Fütterung, mg/l | 1,01 | 0,59 | 0,82 |
| 12 | NH₄-Konzentration 180 Minuten nach der Fütterung, mg/l | 0,80 | 0,47 | 0,65 |

Das Wasser aus den Ausgängen der fünf Fischtanks 12 - 16 (Fig. 4) der ersten Wasserorganismenzüchtungseinheit 1.1 (Fig. 2) fließt aus ihrem Ausgang 1.1.1 (Fig. 2) zum ersten Eingang 37.1 (Fig. 2) des Mischventils 37 (Fig. 2). Das Wasser aus den Ausgängen der fünfzehn 12 - 26 (Fig. 4) Fischtanks der zweiten Wasserorganismenzüchtungseinheit 1.2 (Fig. 2) fließt aus ihrem Ausgang 1.2.1 (Fig. 2) zum zweiten Eingang 37.3 (Fig. 2) des Mischventils 37 (Fig. 2). Das Wasser aus den Ausgängen der zehn Fischtanks 12 - 21 (Fig. 4) der dritten Wasserorganismenzüchtungseinheit 1.3 (Fig. 2) fließt aus ihrem Ausgang 1.3.1 (Fig. 2) zum dritten Eingang 37.5 (Fig. 2) des Mischventils 37 (Fig. 2).

Vom ersten Ausgang 37.2 (Fig. 2) des Mischventils 37 (Fig. 2) fließt das Wasser zum zweiten Eingang des Wasser-Stabilisiertanks 1.5 (Fig. 4) der ersten Wasserorganismenzüchtungseinheit 1.1 (Fig. 2). Das Wasser vom zweiten Ausgang des Mischventils 37.4 (Fig. 2) fließt zum zweiten Eingang des Wasser-Stabilisiertanks 1.5 (Fig. 4) der zweiten Wasserorganismenzüchtungseinheit 1.2 (Fig. 2). Das Wasser vom dritten Ausgang 37.6 (Fig. 2) des Mischventils 37 (Fig. 2) gelangt zum zweiten Eingang des Wasser-Stabilisiertanks 1,5 (Fig. 4) der dritten Wasserorganismenzüchtungseinheit 1.3 (Fig. 2).

Die Tabelle 4 enthält Vergleichsergebnisse der Versuche der vorgeschlagenen Anlage und der Prototypvorrichtung, um nachzuweisen, dass der technische Effekt gemäß der Erfindung (in Form einer erhöhten Fischbesatzdichte) erreicht wird.

**Tabelle 4**

| **Parameter** | **Beanspruchte Anlage** | | | **Prototypvorrichtung** | | |
|---|---|---|---|---|---|---|
| | Wasserorganismenzüchtungseinheit 1.1 (Fig. 2) | Wasserorganismenzüchtungseinheit 1.2 (Fig. 2) | Wasserorganismenzüchtungseinheit 1.3 (Fig. 2) | 1. Wasserorganismenzüchtungseinheit | 2. Wasserorganismenzüchtungseinheit | 3. Wasserorganismenzüchtungseinheit |
| Mischventil vorhanden | 1 | | | nein | nein | nein |
| Grenzwert der NH₄-Konzentration, mg/l | 3,85 | 3,85 | 3,85 | 3,85 | 3,85 | 3,85 |
| Ist-NH₄-Konzentration, mg/l | 2,05 | 1,20 | 1,66 | 2,05 | 1,20 | 1,66 |
| Durchschnittliche NH₄-Konzentration, mg/l | 1,63 | | | 2,05 | 1,20 | 1,66 |
| Ammoniak-NH₃-Ist-Konzentration, mg/l (Grenzwert 0,02 mg/l, zulässig 0,015 mg/l) | 0,013 | | | 0,016 | 0,009 | 0,013 |
| Reserve je nach der durchschnittlichen NH₄- Konzentration (umgerechnet auf die Differenz zwischen der NH₃-Betriebskonzentration und der NH₃-Ist-Konzentration), mg/l | 0,322 | | | | | |
| Futter, kg/Tag | 682 | 289 | 315 | 459 | 289 | 315 |
| Fischbesatzdichte, kg/m² | 175 | 52 | 43 | 118 | 52 | 43 |

Aus den Ergebnissen der Vergleichsversuche unter Einsatz der Prototypvorrichtung und der Anlage gemäß der Tabelle 4 geht hervor, dass die Anlage den technischen Effekt gemäß der Erfindung sicher gewährleistet (erhöhte Speisefischbesatzdichte von ca. 45%).

### Beispiel 3

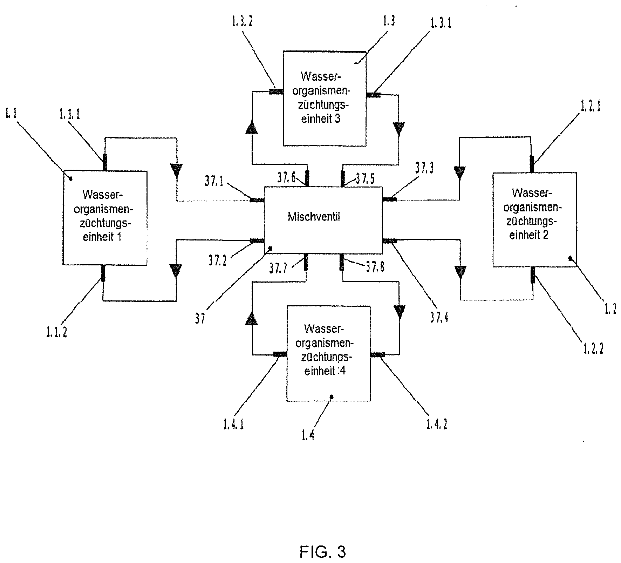

Die Züchtung von Hausen, sibirischem Stör, Sternhausen und Sterlett erfolgt in vier Wasserorganismenzüchtungseinheiten 1.1, 1.2, 1.3 und 1.4 (Fig. 3) mit einer Wassermenge von 1200 m³ darin:
- die erste Züchtungseinheit 1.1 (Fig. 3) hat acht 2 m tiefe Fischtanks 12 - 19 (Fig. 4) mit einem Inhalt von je 150 m³,
- die zweite Wasserorganismenzüchtungseinheit 1.2 (Fig. 3) mit einer Wassermenge von 1350 m³ hat zehn Fischtanks 12 - 21 (Fig. 4) mit unterschiedlichen Konfigurationen:
   - ein 1 m tiefer Fischtank mit einem Inhalt von 30 m³,
   - ein 1,2 m tiefer Fischtank mit einem Inhalt von 50 m³,
   - ein 1,5 m tiefer Fischtank mit einem Inhalt von 60 m³,
   - ein 1,5 m tiefer Fischtank mit einem Inhalt von 40 m³,
   - ein 1,5 m tiefer Fischtank mit einem Inhalt von 120 m³,
   - ein 1,5 m tiefer Fischtank mit einem Inhalt von 150 m³,
   - ein 1,2 m tiefer Fischtank mit einem Inhalt von 150 m³,
   - ein 1,6 m tiefer Fischtank mit einem Inhalt von 250 m³,
   - ein 1,7 m tiefer Fischtank mit einem Inhalt von 240 m³,
   - ein 2 m tiefer Fischtank mit dem Inhalt von 260 m³,
- die dritte Wasserorganismenzüchtungseinheit 1.3 (Fig. 3) mit einer Wassermenge von 1200 m³ hat zwölf Fischtanks mit unterschiedlichen Konfigurationen:
   - acht 2,5 m tiefe Fischtanks mit einem Inhalt von je 100 m³,
   - ein 1,2 m tiefer Fischtank mit einem Inhalt von 150 m³,
   - ein 1,6 m tiefer Fischtank mit einem Inhalt von 50 m³,
   - ein 1,7 m tiefer Fischtank mit einem Inhalt von 120 m³,
   - ein 2 m tiefer Fischtank mit einem Inhalt von 80 m³,
- die vierte Wasserorganismenzüchtungseinheit mit einer Wassermenge von 400 m³ hat vierzehn Fischtanks mit unterschiedlichen Konfigurationen:
   - sieben 1,3 m tiefe Fischtanks mit einem Inhalt von je 150 m³ und
   - sieben 1 m tiefe Fischtanks mit einem Inhalt von je 50 m³.

Die erste Wasserorganismenzüchtungseinheit 1.1 (Fig. 3) enthält Hausen im siebenten Züchtungsjahr mit einer durchschnittlichen Einwaage von 30 kg und einer Fischbiomasse von 90 Tonnen. Die zweite Wasserorganismenzüchtungseinheit 1.2 (Fig. 3) enthält sibirischen Stör im vierten Züchtungsjahr mit einer durchschnittlichen Einwaage von 10 kg und einer Fischbiomasse von 65 Tonnen. Die dritte Wasserorganismenzüchtungseinheit 1.3 (Fig. 3) enthält Sternhausen im vierten Züchtungsjahr mit einer durchschnittlichen Einwaage von 7 kg und einer Fischbiomasse von 50 Tonnen. Die vierte Wasserorganismenzüchtungseinheit 1.4 (Fig. 3) enthält Sterlett mit einer durchschnittlichen Einwaage von 2 kg und einer Fischbiomasse von 32 Tonnen im zweiten Züchtungsjahr. Der gesamte Fisch gehört zum verkaufsreifen Fisch.

Die Fische in der ersten Wasserorganismenzüchtungseinheit 1.1 (Fig. 3) und in der zweiten Wasserorganismenzüchtungseinheit 1.2 (Fig. 3) werden gleichzeitig gefüttert. Die Fische in der dritten Wasserorganismenzüchtungseinheit 1.3 (Fig. 3) und in der vierten Wasserorganismenzüchtungseinheit 1.4 (Fig. 3) werden mit einer Zeitverschiebung um 4 Stunden gefüttert.

Die Tabelle 5 enthält Vergleichsergebnisse der Versuche der vorgeschlagenen Anlage und der Prototypvorrichtung, die die Erreichbarkeit des technischen Effekts gemäß der Erfindung nachweisen.

**Tabelle 5**

| **Nr** | **Parameter** | **Wasserorganismenzüchtungseinheit 1.1 (****Fig. 3****)** | **Wasserorganismenzüchtungseinheit 1.2 (****Fig. 3****)** | **Wasserorganismenzüchtungseinheit 1.3 (****Fig. 3****)** | **Wasserorganismenzüchtungseinheit 1.4 (****Fig. 3****)** |
|---|---|---|---|---|---|
| 1 | Fischart | Hausen | Sibirische Stör | Sternhausen | Sterlett |
| 2 | Fischalter, Jahre | 7 | 4 | 4 | 2 |
| 3 | Fischbiomasse, Tonnen | 90 | 65 | 50 | 32 |
| 4 | Besatzdichte, kg/m² | 113 | 72 | 63 | 34 |
| 5 | Futter, kg/Tag | 405 | 455 | 403 | 480 |
| 6 | NH₄-Konzentration, durchschnittlich, mg/l | 0,63 | 0,63 | 0,63 | 0,64 |
| 7 | NH₄-Ist-Konzentration, mg/l | 1,96 | 1,96 | 0,63 | 0,64 |
| 8 | Ammoniak-NH₃-Konzentration, mg/l, (Grenzwert 0,02 mg/l, zulässig 0,015 mg/l) | 0,015 | 0,015 | 0,015 | 0,015 |
| 9 | NH₄-Konzentration 15 Minuten nach der Fütterung, mg/l | 1,96 | 1,96 | 1,95 | 1,99 |
| 10 | NH₄-Konzentration 60 Minuten nach der Fütterung, mg/l | 1,36 | 1,36 | 1,36 | 1,39 |
| 11 | NH₄-Konzentration 120 Minuten nach der Fütterung, mg/l | 0,97 | 0,96 | 0,96 | 0,98 |
| 12 | NH₄-Konzentration 180 Minuten nach der Fütterung, mg/l | 0,77 | 0,76 | 0,76 | 0,78 |
| 13 | NH₄-Konzentration 240 Minuten nach der Fütterung, mg/l | 0,63 | 0,63 | 0,63 | 0,64 |

Das Wasser aus den Ausgängen der acht Fischtanks 12 - 19 (Fig. 4) und danach aus dem Ausgang 1.1.1 (Fig. 3) der ersten Wasserorganismenzüchtungseinheit 1.1 (Fig. 3) fließt zum ersten Eingang 37.1 (Fig. 3) des Mischventils 37 (Fig. 3). Das Wasser aus den Ausgängen der zehn Fischtanks 12 - 21 (Fig. 4) und dann aus dem Ausgang 1.2.1 (Fig. 3) der zweiten Wasserorganismenzüchtungseinheit 1.2 (Fig. 3) fließt zum zweiten Eingang 37.3 (Fig. 3) des Mischventils 37 (Fig. 3). Das Wasser aus den Ausgängen der zwölf Fischtanks 12 - 23 (Fig. 4) und dann aus dem Ausgang 1.3.1 (Fig. 3) der dritten Wasserorganismenzüchtungseinheit 1.3 (Fig. 3) fließt zum dritten Eingang 37.5 (Fig. 3) des Mischventils 37 (Fig. 3). Das Wasser aus den Ausgängen der vierzehn Fischtanks 12 - 25 (Fig. 4) und dann aus dem Ausgang 1.4.1 (Fig. 3) der vierten Wasserorganismenzüchtungseinheit1.4 (Fig. 3) fließt zum vierten 37.7 (Fig. 4) Eingang des Mischventils 37 (Fig. 3).

Vom ersten Ausgang 37.2 (Fig. 3) des Mischventils 37 (Fig. 3) fließt das Wasser zum zweiten Eingang des Wasser-Stabilisiertanks 1.5 (Fig. 4) der ersten Wasserorganismenzüchtungseinheit 1.1 (Fig. 3). Das Wasser vom zweiten Ausgang 37.4 (Fig. 3) des Mischventils 37 (Fig. 3) fließt zum zweiten Eingang des Wasser-Stabilisiertanks 1.5 (Fig. 4) der zweiten Wasserorganismenzüchtungseinheit 1.2 (Fig. 3). Das Wasser vom dritten Ausgang 37. 6 (Fig. 3) des Mischventils 37 (Fig. 3) fließt zum zweiten Eingang des Wasser-Stabilisiertanks 1.5 (Fig. 4) der dritten Wasserorganismenzüchtungseinheit 1.3 (Fig. 3). Das Wasser vom vierten Ausgang 37.8 (Fig. 3) des Mischventils 37 (Fig. 3) fließt zum zweiten Eingang des Wasser-Stabilisiertanks 1.5 (Fig. 4) der vierten Wasserorganismenzüchtungseinheit 1.4 (Fig. 3).

Die Tabelle 6 enthält Vergleichsergebnisse der Versuche der vorgeschlagenen Anlage und der Prototypvorrichtung, die nachweisen, dass der technische Effekt gemäß der Erfindung (und zwar die erhöhte Fischbesatzdichte) bei der Anwendung der beanspruchten Anlage erreicht wird.

**Tabelle 6**

| **Parameter** | **Beanspruchte Anlage** | | | | **Prototypvorrichtung** | | | |
|---|---|---|---|---|---|---|---|---|
| | Wasserorganismenzüchtungseinheit 1.1 (Fig. 3) | Wasserorganismenzüchtungseinheit 1.2 (Fig. 3) | Wasserorganismenzüchtungseinheit 1.3 (Fig. 3) | Wasserorganismenzüchtungseinheit 1.4 (Fig. 3) | 1. Wasserorganismenzüchtungseinheit | 2. Wasserorganismenzüchtungseinheit | 3. Wasserorganismenzüchtungseinheit | 4. Wasserorganismenzüchtungseinheit |
| Mischventil vorhanden | 1 | | | | nein | nein | nein | nein |
| Grenzwert der NH₄-Konzentration, mg/l | 3,85 | 3,85 | 3,85 | 3,85 | 3,85 | 3,85 | 3,85 | 3,85 |
| NH₄-Ist-Konzentration, mg/l | 1,96 | 1,96 | 0,63 | 0,64 | 1,96 | 1,96 | 1,95 | 1,99 |
| Durchschnittliche NH₄- Konzentration, mg/l | 0,64 | | | | 1,96 | 1,96 | 1,95 | 1,99 |
| Ammoniak-NH₃ Ist-Konzentration, mg/l (Grenzwert 0,02 mg/l, zulässig 0,015 mg/l) | 0,005 | | | | 0,015 | 0,015 | 0,015 | 0,015 |
| Reserve je nach der durchschnittlichen NH₄-Konzentration (umgerechnet auf die Differenz zwischen der NH₃-Betriebskonzentration und der NHs-Ist-Konzentration), mg/l • | 0, 326 | 0, 326 | 0,326 | 0,326 | | | | |
| < Futter, kg/Ta | 614 | 690 | 612 | 723 | 405 | 455 | 403 | 480 |
| Besatzdichte, kg/m² | 170 | 109 | 96 | 52 | 113 | 72 | 63 | 34 |

Aus den Ergebnissen der Vergleichsversuche gemäß der Tabelle 6 unter Einsatz der Prototypvorrichtung und der beanspruchten Anlage geht hervor, dass die beanspruchte Anlage den technischen Effekt gemäß der Erfindung sicher gewährleistet (eine um fast 52% erhöhte Besatzdichte von Speisefisch).

Die beanspruchte Anlage kann unter Verwendung von den aus dem Stand der Technik bekannten Materialien, Baugruppen und Zubehör sowie von einer bekannten Software für IBM-kompatible Personalcomputer realisiert werden.

## Patentansprüche

1. Geschlossene Kreislaufanlage zur Züchtung von Speisefischen,
**dadurch gekennzeichnet,**
**dass** die Kreislaufanlage enthält:
- mindestens eine erste (1.1) [Fig. 1 - Fig. 3] und eine zweite (1.2) [Fig. 1 - Fig. 3] Wasserorganismenzüchtungseinheit, wobei diese Wasserorganismenzüchtungs-einheiten miteinander mittels eines Zwangswasseraustausches über ein Mischventil (37) [Fig. 1] zusammenwirken und jede der Wasserorganismenzüchtungseinheiten durch je einen Wasser-Stabilisiertank (1.5) [Fig. 4] gebildet ist, der folgendes aufweist:
- einen ersten, einen zweiten und einen dritten Eingang,
- einen ersten, einen zweiten und einen dritten Ausgang und
- einen Daten-Schalteingang und einen Daten-Schaltausgang,
- eine mechanische Filterungseinheit (2) [Fig. 4], die einen ersten, einen zweiten und einen dritten Ausgang, einen Eingang, einen Daten-Schalteingang und einen Daten-Schaltausgang aufweist,
- eine biologische Wasseranreicherungseinheit (3) [Fig. 4], die mit einem ersten und einem zweiten Ausgang und einem ersten und einem zweiten Eingang versehen ist,
- einen Denitrifikations-Biofilter (4) [Fig. 4], der einen ersten und einen zweiten Ausgang und einen ersten und einen zweiten Eingang aufweist,
- einen Nitrifikations-Biofilter (5) [Fig. 4], der einen ersten und einen zweiten Ausgang und einen ersten und einen zweiten Eingang aufweist,
- einen Belüftungskanal (6) [Fig. 4], der mit einem ersten und einem zweiten Ausgang, einem ersten und einem zweiten Daten-Schaltausgang, einem ersten, einem zweiten, einem dritten, einem vierten, einem fünften und einem sechsten Eingang versehen ist,
- eine UV-Bestrahlungseinheit (7) [Fig. 4], die einen Eingang, einen Daten-Schalteingang und einen Ausgang aufweist,
- einen Boiler (8) [Fig. 4], der einen Ausgang, einen Eingang und einen Daten-Schalteingang aufweist,
- eine Wasser-pH-Stabilisiereinheit (9) [Fig. 4], die einen Ausgang und einen Daten-Schalteingang aufweist,
- eine Pumpe (10) [Fig. 4] mit einem Daten-Schalteingang, einem Eingang und einem Ausgang,
- einen ersten Luftverdichter (11) [Fig. 4] mit einem ersten, einem zweiten und einem dritten Ausgang und einem Daten-Schalteingang,
- mindestens einen Fischtank (12 - 26) [Fig. 4], der mit einem ersten, einem zweiten und einem dritten Eingang, einem Daten-Schalteingang und mit einem ersten und einem zweiten Ausgang versehen ist,
- einen Wasserreservetank (27) [Fig. 4] mit einem Eingang und einem Ausgang,
- einen zweiten Luftverdichter (28) [Fig. 4] mit einem Daten-Schalteingang und einem Ausgang,
- eine Frischwasserzugabe-Einheit (29) [Fig. 4] mit einem Daten-Schalteingang, einem ersten und einem zweiten Ausgang,
- eine Abführungseinheit zur Abführung von Abwasser und Sedimenten aus der biologischen Wasseranreicherungseinheit, dem Denitrifikations-Biofilter und dem Nitrifikations-Biofilter (30) [Fig. 4], wobei die Abführungseinheit einen ersten und einen zweiten Eingang aufweist,
- einen ersten Verschluss (31) [Fig. 4] mit einem Ausgang, einem Eingang und einem Daten-Schalteingang,
- einen zweiten Verschluss (32) [Fig. 4] mit einem Ausgang, einem Eingang und einem Daten-Schalteingang,
- einen dritten Verschluss (33) [Fig. 4] mit einem Ausgang, einem Eingang und einem Daten-Schalteingang,
- eine Füllstandautomatikeinheit (3) (34) [Fig. 4] mit einem ersten, einem zweiten, einem dritten und einem vierten Daten-Schalteingang, einem ersten, einem zweiten, einem dritten, einem vierten und einem fünften Daten-Schaltausgang, einem ersten und einem zweiten Daten-Schalteingang/- ausgang,
- eine Wasserparameterüberwachungs- und -steuereinheit (35) [Fig. 4], die einen ersten, einen zweiten, einen dritten und einen vierten Daten-Schaltausgang, einen Daten-Schalteingang und einen Daten-Schalteingang/- ausgang aufweist,
- eine Absaugpumpe zur Förderung von Sedimenten aus der biologischen Wasseranreicherungseinheit, dem Denitrifikations-Biofilter und dem Nitrifikations-Biofilter (36) [Fig. 4], wobei die Absaugpumpe zur Förderung von Sedimenten einen Ausgang, einen ersten, einen zweiten und einen dritten Eingang und einen Daten-Schalteingang aufweist,
- eine Pumpe (38) [Fig. 4] einer biologischen Wasseranreicherungseinheit mit einem Eingang, einem Ausgang und einem Daten-Schalteingang, wobei
- der dritte Ausgang des Wasser-Stabilisiertanks (1.5) [Fig. 4] mit dem zweiten Eingang der biologischen Wasseranreicherungseinheit (3) [Fig. 4] verbunden ist, der zweite Ausgang des Wasser-Stabilisiertanks (1.5) [Fig. 4] mit dem ersten Eingang der mechanischen Filterungseinheit (2) [Fig. 4] verbunden ist, der Daten-Schaltausgang der mechanischen Filterungseinheit (2) [Fig. 4] mit dem zweiten Daten-Schalteingang der Füllstandautomatikeinheit (34) [Fig. 4] verbunden ist, der Daten-Schalteingang der mechanischen Filterungseinheit (2) [Fig. 4] mit dem zweiten Ausgang der Füllstandautomatikeinheit (34) [Fig. 4] verbunden ist, der erste Ausgang des Wasser-Stabilisiertanks (1.5) [Fig. 4] mit dem Eingang des ersten Verschlusses (31) [Fig. 4] verbunden ist, der Daten-Schalteingang des ersten Verschlusses (31) [Fig. 4] mit dem dritten Daten-Schaltausgang der Füllstandautomatikeinheit (34) [Fig. 4] verbunden ist, der Daten-Schaltausgang des Wasser-Stabilisiertanks (1.5) [Fig. 4] mit dem ersten Daten-Schalteingang der Füllstandautomatikeinheit (34) [Fig. 4] verbunden ist, der zweite Eingang des Wasser-Stabilisiertanks (1.5) [Fig. 4] mit dem zweiten Ausgang des Mischventils (37) [Fig. 4] verbunden ist, der dritte Eingang des Wasser-Stabilisiertanks (1.5) [Fig. 4] mit dem ersten Ausgang des Denitrifikations-Biofilters (4) [Fig. 4] verbunden ist, der zweite Ausgang des Denitrifikations-Biofilters (4) [Fig. 4] mit dem zweiten Eingang der Absaugpumpe zur Förderung von Sedimenten aus der biologischen Wasseranreicherungseinheit, dem Denitrifikations-Biofilter und dem Nitrifikations-Biofilter (36) [Fig. 4] verbunden ist, der Daten-Schalteingang des Wasser-Stabilisiertanks (1.5) [Fig. 4] mit dem ersten Daten-Schaltausgang der Füllstandautomatikeinheit (34) [Fig. 4] verbunden ist, der dritte Ausgang der mechanischen Filterungseinheit (2) [Fig. 4] mit dem Eingang des zweiten Verschlusses (32) [Fig. 4] verbunden ist, dessen Daten-Schalteingang mit dem vierten Daten-Schaltausgang der Füllstandautomatikeinheit (34) [Fig. 4] verbunden ist, der zweite Ausgang der mechanischen Filterungseinheit (2) [Fig. 4] mit dem Eingang des dritten Verschlusses (33) [Fig. 4] verbunden ist, der Daten-Schalteingang des dritten Verschlusses (33) [Fig. 4] mit dem zweiten Daten-Schaltausgang der Füllstandautomatikeinheit (34) [Fig. 4] verbunden ist, der erste Ausgang der mechanischen Filterungseinheit (2) [Fig. 4] mit dem ersten Eingang der biologischen Wasseranreicherungseinheit (3) [Fig. 4] verbunden ist, der erste Ausgang der biologischen Wasseranreicherungseinheit (3) [Fig. 4] mit dem Eingang der Pumpe (38) [Fig. 4] der biologischen Wasseranreicherungseinheit verbunden ist, der Ausgang der Pumpe (38) [Fig. 4] der biologischen Wasseranreicherungseinheit mit dem zweiten Eingang des Denitrifikations-Biofilters (4) [Fig. 4] verbunden ist und ihr Daten-Schalteingang mit dem zweiten Daten-Schaltausgang der Füllstandautomatikeinheit (34) [Fig. 4] verbunden ist, der zweite Ausgang der biologischen Wasseranreicherungseinheit (3) [Fig. 4] mit dem dritten Eingang der Absaugpumpe zur Förderung von Sedimenten aus der biologischen Wasseranreicherungseinheit, dem Denitrifikations-Biofilter und dem Nitrifikations-Biofilter (36) [Fig. 4] verbunden ist, der Daten-Schalteingang des Nitrifikations-Biofilters (36) mit dem zweiten Daten-Schaltausgang der Füllstandautomatikeinheit (34) [Fig. 4] verbunden ist, der Ausgang des dritten Verschlusses (33) [Fig. 4] mit dem ersten Eingang des Nitrifikations-Biofilters (5) [Fig. 4] verbunden ist, der zweite Eingang des Nitrifikations-Biofilters (5) [Fig. 4] mit dem ersten Ausgang des ersten Luftverdichters (11) [Fig. 4] verbunden ist, der erste Ausgang des Nitrifikations-Biofilters (5) [Fig. 4] mit dem ersten Eingang der Absaugpumpe zur Förderung von Sedimenten aus der biologischen Wasseranreicherungseinheit, dem Denitrifikations-Biofilter und dem Nitrifikations-Biofilter (36) [Fig. 4] verbunden ist, der zweite Ausgang des Nitrifikations-Biofilters (5) [Fig. 4] mit dem vierten Eingang des Belüftungskanals (6) [Fig. 4] verbunden ist, der zweite Ausgang des ersten Luftverdichters (11) [Fig. 4] mit dem fünften Eingang des Belüftungskanals (6) [Fig. 4] verbunden ist, der dritte Ausgang des ersten Luftverdichters (11) [Fig. 4] mit dem ersten Eingang des Denitrifikations-Biofilters (4) [Fig. 4] verbunden ist, der Daten-Schalteingang des ersten Luftverdichters (11) [Fig. 4] mit dem zweiten Daten-Schaltausgang der Füllstandautomatikeinheit (34) [Fig. 4] verbunden ist, der Ausgang des ersten Verschlusses (31) [Fig. 4] mit dem dritten Eingang des Belüftungskanals (6) [Fig. 4] verbunden ist, der Ausgang des zweiten Verschlusses (32) [Fig. 4] mit dem zweiten Eingang des Belüftungskanals (6) [Fig. 4] verbunden ist, der zweite Ausgang der Frischwasserzugabe-Einheit (29) [Fig. 4] mit dem sechsten Eingang des Belüftungskanals (6) [Fig. 4] verbunden ist, der erste Ausgang der Frischwasserzugabe-Einheit (29) [Fig. 4] mit dem dritten Eingang mindestens eines Fischtanks (12 - 26) [Fig. 4] verbunden ist, der Daten-Schalteingang der Frischwasserzugabe-Einheit (29) [Fig. 4] mit dem zweiten Daten-Schaltausgang der Füllstandautomatikeinheit (34) [Fig. 4] verbunden ist, der zweite Ausgang des Belüftungskanals (6) [Fig. 4] mit dem ersten Eingang der Abführungseinheit zur Abführung von Abwasser und Sedimenten aus der biologischen Wasseranreicherungseinheit, dem Denitrifikations-Biofilter und dem Nitrifikations-Biofilter (30) [Fig. 4] verbunden ist, der zweite Eingang der biologischen Wasseranreicherungseinheit, des Denitrifikations-Biofilters und des Nitrifikations-Biofilters (30) [Fig. 4] mit dem Ausgang der Absaugpumpe zur Förderung von Sedimenten aus der biologischen Wasseranreicherungseinheit, dem Denitrifikations-Biofilter und dem Nitrifikations-Biofilter (36) [Fig. 4] verbunden ist, der erste Eingang des Belüftungskanals (6) [Fig. 4] mit dem Ausgang der pH-Stabilisiereinheit (9) [Fig. 4] verbunden ist, der erste Daten-Schaltausgang des Belüftungskanals (6) [Fig. 4] mit dem vierten Daten-Schalteingang der Füllstandautomatikeinheit (34) [Fig. 4] daten-schalttechnisch verbunden ist, der zweite Daten-Schaltausgang des Belüftungskanals (6) [Fig. 4] mit dem Daten-Schalteingang der Wasserparameterüberwachungs- und -steuereinheit (35) [Fig. 4] verbunden ist, der erste Ausgang des Belüftungskanals (6) [Fig. 4] mit dem Eingang der UV-Bestrahlungseinheit (7) [Fig. 4] verbunden ist, der Daten-Schalteingang der UV-Bestrahlungseinheit (7) [Fig. 4] mit dem vierten Daten-Schaltausgang der Wasserparameterüberwachungs- und - steuereinheit (35) [Fig. 4] verbunden ist, der Ausgang der UV-Bestrahlungseinheit (7) [Fig. 4] für das Wasser mit dem Eingang des Boilers (8) [Fig. 4] verbunden ist, der Daten-Schalteingang/-ausgang der Wasserparameterüberwachungs- und -steuereinheit (35) [Fig. 4] mit dem ersten Daten-Schaltausgang der Füllstandautomatikeinheit (34) [Fig. 4] verbunden ist, der erste Daten-Schaltausgang der Wasserparameterüberwachungs- und - steuereinheit (35) [Fig. 4] mit dem Daten-Schalteingang der Wasser-pH-Stabilisiereinheit (9) [Fig. 4] verbunden ist, der zweite Daten-Schaltausgang der Füllstandautomatikeinheit (35) [Fig. 4] mit dem Daten-Schalteingang mindestens eines Fischtanks (12 - 26) [Fig. 4] verbunden ist, der dritte Daten-Schaltausgang der Wasserparameterüberwachungs- und -steuereinheit (35) [Fig. 4] mit dem Daten-Schalteingang des Boilers (8) [Fig. 4] verbunden ist, der Ausgang des Boilers (8) [Fig. 4] mit dem Eingang der Pumpe (10) [Fig. 4] verbunden ist, der Daten-Schalteingang der Pumpe (10) [Fig. 4] mit dem ersten Daten-Schalteingang/-ausgang der Füllstandautomatikeinheit (34) [Fig. 4] verbunden ist, der Ausgang der Pumpe (10) [Fig. 4] mit dem zweiten Eingang mindestens eines Fischtanks (12 - 26) [Fig. 4] verbunden ist, der Daten-Schalteingang des zweiten Luftverdichters (28) [Fig. 4] mit dem ersten Daten-Schalteingang/-ausgang der Füllstandautomatikeinheit (34) [Fig. 4] verbunden ist, der Ausgang des zweiten Luftverdichters (28) [Fig. 4] mit dem ersten Eingang mindestens eines Fischtanks (12 - 26) [Fig. 4] verbunden ist, der erste Ausgang mindestens eines Fischtanks (12 - 26) [Fig. 4] mit dem Eingang des Wasserreservetanks (27) [Fig. 4] verbunden ist, der Ausgang des Wasserreservetanks (27) [Fig. 4] mit dem Eingang der Pumpe (39) [Fig. 4] des Wasserreservetanks verbunden ist, der Ausgang der Pumpe (39) [Fig. 4] des Wasserreservetanks mit dem ersten Eingang des Wasser-Stabilisiertanks (1.5) [Fig. 4] verbunden ist, der Daten-Schaltausgang der Pumpe (39) [Fig. 4] des Wasserreservetanks mit dem dritten Daten-Schalteingang der Füllstandautomatikeinheit (34) [Fig. 4] verbunden ist, der Daten-Schalteingang der Pumpe (39) [Fig. 4] des Wasserreservetanks mit dem fünften Ausgang der Füllstandautomatikeinheit (34) [Fig. 4] verbunden ist, der zweite Ausgang mindestens eines Fischtanks (12 - 26) [Fig. 4] mit dem Eingang (1.1.1) [Fig. 4] des Mischventils (37) [Fig. 4] verbunden ist, der zweite Daten-Schalteingang/-ausgang der Füllstandautomatikeinheit (34) [Fig. 4] mit dem Daten-Schalteingang/-ausgang eines IBM-kompatiblen Personalcomputers mit der darauf installierten Software "Steuerprogramm für verfahrenstechnische Prozesse in modernen Fischzuchtanlagen" verbunden ist.
